# EUROPEAN PATENT SPECIFICATION

(11) **EP 4 148 602 B1**
(45) Date of publication and mention of the grant of the patent: **11.03.2026**
(21) Application number: 21943311.7
(22) Date of filing: 11.11.2021
(51) Int. Cl.: G06F 21/33, H04L 9/08, G06F 21/62, G06F 21/64, H04L 9/32, H04L 9/00

(54) **FULLY DISTRIBUTED BLOCKCHAIN SYSTEM AND COMPUTER PROGRAM FOR CRYPTO ASSET TRANSACTION THAT ALLOWS PARTICIPATION OF ANONYMOUS USER WHILE PREVENTING ILLEGAL TRANSACTION**
VOLLSTÄNDIG VERTEILTES BLOCKCHAIN-SYSTEM UND COMPUTERPROGRAMM FÜR KRYPTOASSET-TRANSAKTIONEN MIT TEILNAHME ANONYMEN BENUTZERN BEI VERHINDERUNG ILLEGALER TRANSAKTIONEN
SYSTÈME DE CHAÎNE DE BLOCS ENTIÈREMENT RÉPARTI ET PROGRAMME D'ORDINATEUR POUR UNE TRANSACTION DE CRYPTO-ACTIFS QUI AUTORISE LA PARTICIPATION D'UN UTILISATEUR ANONYME TOUT EN EMPÊCHANT UNE TRANSACTION ILLÉGALE

(30) Priority: 22.07.2021 JP 2021121101
(43) Date of publication of application: 15.03.2023
(73) Proprietor: PROOF-OF-SEARCH K.K., Tokyo 1510053 (JP)
(72) Inventor: SHIBATA, Naoki, Kizugawa-shi, Kyoto 6190224 (JP); ITO, Eiji, Tokyo 1510053 (JP); WATANABE, Hironori, Tokyo 1120002 (JP)
(74) Representative: Kuhnen & Wacker Patent- und Rechtsanwaltsbüro PartG mbB
(86) International application number: PCT/JP2021/041510
(87) International publication number: WO 2023/002640

(56) References cited:
- JP-A- 2018 093 434
- JP-A- 2020 177 372
- JP-U- 3 228 339
- US-A1- 2019 347 656
- US-A1- 2020 279 257
- US-A1- 2020 387 503

## Description

### Technical Field

The present invention relates to a blockchain system and cryptocurrency realized by the blockchain system that has a function to register user identity information with a digital certificate authority (hereafter referred to as a CA) and limit the operations that can be performed on the blockchain depending on whether the user is registered or not, thereby preventing money laundering and other illegal activities using the cryptocurrency.

### Background of the invention

Since Bitcoin was introduced (Non-Patent Document 1), a number of blockchain-based cryptocurrencies have been developed. Transactions using cryptocurrencies have been increasing every year, and the total market value of cryptocurrencies surpassed $1 trillion in early 2021.

A blockchain is data in a list structure, designed to allow new data to be added one after another and to make it difficult to modify data that has been registered in the past. The history of all transactions in the cryptocurrency is stored in this blockchain. Blockchain systems are usually designed as distributed systems and can be roughly classified as centralized and fully decentralized. In centralized blockchain systems, specific nodes in the network are given privileges, and these nodes control the entire network. Here, a node refers to a computer connected to a network. Since these blockchain systems are designed assuming that those privileged nodes can be trusted, it is easy to control the system. However, there is a disadvantage that the privileged nodes may become single points of failure. In a fully decentralized system, on the other hand, each node is treated equally, and the entire network functions through the accumulation of decisions made by each node. To eliminate a single point of failure in a fully decentralized system, the system must be configured to tolerate the failure of some nodes, and this has the disadvantage of being computationally expensive to reach consensus among the nodes to make the network function. In addition, it is necessary to prepare for node spoofing, etc.

Bitcoin is a cryptocurrency built on a fully decentralized blockchain system that does not require a central bank or other specific node to transfer coins between users. Here, users refer to the users of the system. The history of transactions is recorded in a distributed ledger. A mechanism called Proof of Work (PoW) determines the correct outcome of transactions recorded in the ledger, preventing double use of coins, etc. It is easy to reserve a large number of IP addresses in a network, therefore majority voting, where voting rights are given for each IP address, does not work. PoW is used to achieve majority voting in such an environment, where voting rights are given according to the amount of computation. Bitcoin's distributed ledger stores a large number of blocks as a linked list. This linked list is called a blockchain. Each block contains several data items and a hash value of one previous block. Each time a new block is added to the chain, the hash value of the new block is calculated and broadcast on the network. In PoW, miners have to find a number whose hash value begins with a determined number of zero bits to add a new block to the blockchain. Each block has an entry for storing an integer value called a nonce, and only a block with a nonce that makes the hash value of the entire block starting with a required number of zero bits is accepted as a valid block. In order to maintain the network, new coins are awarded as an incentive to nodes that successfully add new blocks. The node that tries to add a new block is called a miner, and the computation to add a new block is called mining. Benign miners try to add blocks to the longest chain known to those nodes. As long as most of the CPU resources are provided by benign miners to add blocks, the chain that records the correct transactions will grow the fastest. This is how majority voting is realized, with voting rights given according to the amount of computation. This mechanism makes it difficult to forge or falsify information recorded in the distributed ledger, and attacks will not succeed unless the CPU resources of the malicious nodes exceed the CPU resources of the benign nodes. In a fully decentralized cryptocurrency such as Bitcoin, the coins have no intrinsic value, but the data on the network itself has value. This value is backed by the users participating in the blockchain system, and stronger backing requires the participation of a large number of users.

Fully decentralized blockchain systems, such as Bitcoin, do not have a functionality to verify the identity of the user in the system during transactions of cryptocurrency, and money can be transferred without disclosing identity information. As a result, various illegal activities using cryptocurrencies have been rampant. Examples of illegal activities using cryptocurrencies include the sale of illegal goods, Ponzi schemes, money laundering, and receiving ransom for ransomware (Non-Patent Documents 2 and 3). In addition, tax evasion is practically going unchecked, taking advantage of the fact that payment is difficult to confirm by government authorities. In order to prevent illegal transactions from going unchecked, it is desirable for each user to trade only with legitimate counterparties. In addition, since the amount taxed on each user's transactions will vary depending on the nationality and other attributes of the counterparty, a reliable method of obtaining information for this purpose is needed to calculate the amount of tax due.

In order to confirm that transactions conducted using cryptocurrencies are legal, it is conceivable to limit the users participating in the blockchain for realizing cryptocurrencies to only those who have disclosed their identity information. This would make it easier to arrest the users who conduct illegal activities, but the blockchain system has to be configured as a centralized system, since the identity information needs to be verified by a specific organization. There is also a concern that not many users will participate in this blockchain because users who do not want to disclose their identity information will not participate in this blockchain.

Blockchain systems are basically designed in such a way that the recorded data are available to the entire world. Therefore, if the blockchain is made to record all the identity information of the users, all the identity information will be made public. Participants who wish to legally conduct transactions with cryptocurrencies may not necessarily want all of their identity information to be made public (Non-Patent Document 4). On the other hand, government authorities have a need to know the identity information of participants for the purpose of arresting the users who conduct illegal activities.

Below, we explain digital signatures and digital certificate authorities. When data is transmitted over a network, the data is encrypted to prevent a third party from stealing the data contents. In symmetric-key cryptography, data called a common key is used for encryption and decryption, and data encrypted using that common key can only be decrypted using the same key. In public-key cryptography, on the other hand, the keys used for encryption and decryption are different, and data encrypted using one can only be decrypted by using the key that is paired with it. In most cases, one of these keys is called a private key, and each user keeps the private key without disclosing it to other users. The key that is paired with the private key is called a public key and is widely disclosed. When a user wants to send data to another user, encryption using the latter user's public key guarantees that only the latter user can decrypt the data. On the other hand, if a user publishes the encrypted data using his/her private key, the recipient of this data can verify that this data was encrypted by the user who holds the private key corresponding to the public key that can decrypt the encrypted data.

There is a mechanism called a hash function, which generates a fixed length of data, called a digest, for arbitrary data. While the computation time required to generate a digest from arbitrary data using a hash function is minimal, finding the corresponding data in the digest is practically impossible due to the extremely large computation time required.

Data obtained by encrypting the digest of arbitrary data with a user's private key is called a digital signature. By decrypting the digital signature using the public key and verifying that it matches the digest of the corresponding data, it can be verified that the digital signature was created by the user whose private key corresponds to the public key. There are methods to achieve the same purpose without using public key cryptography, and in consideration of such methods, the key for obtaining a digital signature is called a signature key and the key for verifying a digital signature is called a verification key as a more general term.

A digital certificate and a CA are used to verify that a certain verification key is not an impersonator's verification key, but rather the verification key of the person with whom the user really wants to communicate. Each user visits a CA to prove his or her identity by conventional means (e.g., photo verification). When the CA confirms that the user's identity information is correct, the CA signs the set of the user's verification key and identity information. This set of the user's verification key, identity information, and signature by the CA is called a digital certificate. By verifying the digital certificate of the communicating party using the CA's verification key, it can be verified that the communicating party is not an impersonator. This allows the identity information of the communicating party to be verified as stated in the digital certificate, as long as the CA is trustworthy and the user's signature key has not been compromised.

The personal authentication and verification system and method described in the Patent Document 1 is an idea for an individual/client authentication and verification process and pseudonymity system that monitors and regulates transactions involving cryptographic electronic money. The invention is similar to the present application in that it aims to make it possible to identify all senders and receivers of cryptocurrencies. The invention requires communication between the monitoring system and the client wallet to generate an authorized currency address, but the present application differs in that the client wallet alone can generate the address, just like existing blockchain systems such as Bitcoin. The invention refuses to create an account for a registrant whose legal status has not been verified. However, if the users whose legal status is not authenticated are not allowed to participate, there is a concern that the number of users participating in the network will be reduced, which may lead to degradation of the reliability of cryptocurrencies. The present invention allows users who do not disclose their identity information to create accounts. The present invention is expected to attract more participants by rather actively encouraging participation in the network.

The electronic currency usage information system and method for using electronic currency described in Patent Document 2 is an invention related to an electronic currency usage information system that can make electronic currency transactions including cryptocurrencies more secure transactions, and the purpose of this invention is similar to that of this application. In this invention, a server is set up independently from a blockchain and user accounts are registered, and the server displays warnings about transactions within the scope of the information it manages. One problem with this invention is that the scope of information that can be monitored by the system is limited to the information managed by the server, which is set up independently from the blockchain. On the other hand, the present invention is related to blockchain systems, and it is possible to restrict operations, etc. to all user accounts in the blockchain systems according to conditions.

The invention of the system and method for tax collection, analysis, and compliance described in Patent Document 3 is a system that collects and analyzes transaction information linked to IDs such as tax payment number of related natural persons and corporations. One problem with this invention is that it is not constructed as a fully decentralized system. On the other hand, the present invention is for a fully decentralized system, and thus can be robustly operated with the advantages provided by being a fully decentralized system. The present invention also differs in that it prevents illegal transactions on the peer-to-peer network, and the information required with respect to tax payments is recorded on the blockchain along with the verification key of the account conducting the transaction.

### [Prior Art Documents]

### [Patent Documents]

Patent Document 1: Japanese Utility Model Application Publication No. 3228339 U
Patent Document 2: Japanese Patent No. 6799837 B1
Patent Document 3: Japanese Patent No. 6808743 B2

### [Non-Patent Documents]

Non-Patent Document 1: Nakamoto, S.: Bitcoin: A Peer-to-Peer Electronic Cash System (2008).
Non-Patent Document 2: Elliptic. Financial Crime Typologies In Cryptoassets: The Concise Guide for Compliance Leaders. Accessed: Feb. 1, 2021. [Online]. Available: https://www.elliptic.co/resources/typologies-concise-guide-crypto-leaders
Non-Patent Document 3: FATF 40 Recommendations, Available: https://www.fatf-gafi.org/media/fatf/documents/FATF%20Standards%20-%2040%20Recommendations %20rc.pdf
Non-Patent Document 4: Seunghyeon Lee (KAIST, S2W LAB Inc.), Changhoon Yoon (S2W LAB Inc.), Heedo Kang (KAIST), Yeonkeun Kim (KAIST), Yongdae Kim (KAIST), Dongsu Han (KAIST), Sooel Son (KAIST), Seungwon Shin (KAIST, S2W LAB Inc.) Cybercriminal Minds: An investigative study of cryptocurrency abuses in the Dark Web. Accessed: Feb. 1, 2021 [Online]. Available: https://www.ndss-symposium.org/ndss-paper/cybercriminal-minds-an-investigative-study-of-cryptocurrency-abuses-in-the-dark-web/

### Summary of the Invention

### Problems to be Solved by the Invention

The problem to be solved by this application is to provide a fully decentralized blockchain system that prevents illegal activities and tax evasion using cryptocurrencies, such as illegal trading of goods, Ponzi schemes, money laundering, and receiving ransom for ransomware.

### Means for Solving Problems

First, definitions of the terms used herein are described.

A cryptocurrency is a property value that can be exchanged over the Internet. By using a blockchain such as Bitcoin, cryptocurrencies can be exchanged without the need for a third party such as a bank, etc.

A wallet is software that stores and manages a user's private key for transactions of cryptocurrencies such as Bitcoin.

A blockchain system is a computer system for implementing a blockchain, consisting of all computers running software such as miners and wallets.

A user is a person who uses the blockchain system.

A user account corresponds to an account in a bank transaction, and is the data recorded on the blockchain for managing the cryptocurrencies owned by each user on the blockchain. It contains the verification key of the relevant user.

A peer-to-peer network is a distributed computer system architecture in which multiple computers connected by a network communicate with each other with an equal privilege.

A node is a computer connected to a network.

Broadcast is to convey information in such a way that the information is distributed to all computers connected to the network.

Gossip protocol is a method of repeatedly and probabilistically exchanging information between computers connected to a network.

Topology refers to how each computer on the network directly connects to and exchanges information with other computers on the network.

A thread represents a single sequence of instructions that are executed sequentially on a computer that is capable of parallel processing.

The system in this invention is a fully decentralized blockchain for the trading of cryptocurrencies and uses a CA that is independent of the system. Each user registers his or her identity information with the CA at his or her own discretion. Examples of the identity information registered by the user include the user's photograph, written signature, nationality, real name, date of birth, and address. When registering the user's identity information, the CA records the user's digital certificate at an arbitrary location in the blockchain and notifies the user of the location of the digital certificate on the blockchain. This digital certificate contains only the address of the user's account and the minimum information necessary to calculate the amount of tax due for transactions made on this blockchain, and the identity information of the registered user is not included in the digital certificate. The digital certificate may contain a number obtained by applying a hash function to the verification key instead of the verification key. The fact that a digital certificate is registered on the blockchain means that the user's identity information is registered with the CA, but the identity information is not registered on the blockchain, nor is it publicly available. Since CAs must record digital certificates in the blockchain, they themselves must be a user of the blockchain.

When a user performs a transaction using this system, the types of transactions that can be performed are limited according to whether or not this user's digital certificate is registered in the blockchain. A registered user presents its location on the blockchain when performing an operation, and the blockchain system checks this digital certificate to determine whether the operation the user is about to perform is authorized for that user. For example, if the digital certificate is registered, all operations are allowed, but if not, the user will not be able to receive the cryptocurrency. In this case, for users whose digital certificates are not registered, which means that their identity information is not registered, the only method by which they can obtain the cryptocurrency is by mining. By restricting transactions by unregistered users in this way, illegal sales of goods and receipt of ransom money by unregistered users can be eliminated. On the other hand, unregistered users can still pay the cryptocurrency obtained through mining to users whose identity information is known, so the user's incentive for mining is not lost. Registered users can be confident that the cryptocurrency received from unregistered users are not funds obtained through criminal activity. Here, however, we assume that all cryptocurrency obtained through mining were obtained legitimately. As for cases in which a computer virus or other entity conducts mining against the will of the owner of the computer and the creator of the virus obtains the mined cryptocurrency, this is outside the scope of the present invention. In addition, all participants in pool mining must reveal their identity information.

The above function for limiting the types of transactions a user can perform on the blockchain can be implemented in the blockchain, or it can be implemented in the wallet. It is also possible to implement the function in a smart contract.

The user's digital certificate shall include the user's attribute information necessary to calculate the amount of tax due, such as the user's nationality and distinction between natural person and corporation. The CA verifies that this information is correct. For each transaction, entry of the remaining information required for the calculation of tax payments, such as the amount of legal tender paid when the user acquired the cryptocurrency and the time the transaction was executed, should be mandatory. This would allow the calculation of tax payments for the users who register the identity information, based solely on the information registered in the blockchain. Government authorities can obtain the identity information of each user by contacting the CA, and by comparing the amount of tax paid calculated from the information registered in the blockchain with the amount of tax actually paid by each user, they can determine whether the user has properly paid his/her taxes. In addition, if illegal acts are committed, it will be easier to arrest them. The system does not monitor the payment of taxes on profits from mining by the users who do not register the identity information. In addition, this invention does not determine the accuracy of the information needed to calculate the amount of tax due. Even if inaccurate information is entered, it is easy to identify which user is responsible for entering the inaccurate information, and it is assumed that the government authorities or other authorities will take action.

In some cases, a user may wish to proactively disclose his or her identity information to other users. To address such cases, the digital certificate may include a digital signature of the user's identity information provided by the CA. Using this digital signature, anyone can verify the authenticity of the user's own identity information disclosed by the user.

In order for the system to be fully decentralized, the CA must not be a single point of failure. The system shall be equipped with a function for registering the verification keys of CAs in the blockchain and a function for revoking them. In order to verify a registered user's digital certificate, the CA that issued that digital certificate must be valid, and a valid CA is one whose verification key is registered in the blockchain and has not been revoked. Since the verification key of a CA can expire, in order to determine whether an operation on the blockchain by a user is allowed, it is necessary to check whether both the user's digital certificate and the CA that issued the digital certificate were valid back at the time the operation took place. This can be accomplished by examining past blocks in the blockchain.

This system uses PoW to add new CA's verification keys to the blockchain and also to revoke them. The simplest way to achieve this is to use the PoW mechanism as it is, where the miner adding the block decides which CA's verification key to add or revoke. In this case, each miner determines whether the operation of adding or revoking a CA is correct, so that the correct chain grows the fastest. The decision as to whether the operation of adding or revoking a CA is correct may be made by the user running the software of each miner, or the criteria for making the decision may be built into the software of the miner, and the software of the miner may automatically decide according to those criteria. Automatic judgment by the miner's software is equivalent to the user delegating judgment to the author of the miner's software.

In order for each miner to determine whether the operation of adding or revoking a CA is correct or not, the miner must have the information on which the decision is based, and this information could be entered by the owner of the miner's computer. If such a method is used, the decision to add or revoke a CA may be divided among the nodes participating in the blockchain, and if the decision is divided, a fork in the chain will occur. To prevent this fork from occurring, the following steps should be taken. Some user broadcasts a proposal to the network to add or revoke the CA's verification key, and this proposal is approved only if the node that added the new block agrees to the proposal. Once the proposal is approved, opposing nodes can avoid forking by treating the chain with the approved proposal as the correct chain. However, due to the nature of PoW, a proposal may be approved even when only a small portion of the nodes in the network agree to it. To prevent a proposal from being approved with the votes of a small number of nodes, hypothesis testing may be performed over multiple blocks until it is known with certainty that a majority of nodes are in favor of the proposal. To do this, information indicating whether the miner agrees with the proposal is added to each new block that is added by the miner. The information on whether or not they agree with the proposal can be regarded as a random sampling per CPU power. A p-value is calculated from the number of approvals in several consecutive blocks, and a decision is made when the probability that more than a certain percentage of nodes are in favor is greater than a pre-determined value.

By configuring the protocol as described above, if all the verification keys of CAs are lost, operations that are allowed only to users whose identity information is registered will be disabled. However, since mining is still possible, operations to add new CA verification keys can be performed, thus the functionality of the blockchain can be restored.

The registration of the user's digital certificate on the blockchain after the CA has verified the user's identity is accomplished by recording the user's digital certificate at an arbitrary location on the blockchain and informing that user of this location on the blockchain. This user's digital certificate will contain the address of the user's account, the minimum information necessary to calculate the amount of tax due for transactions made on this blockchain, and a digital signature of the user's address and other private identity information stored by the CA. A user indicates that his/her digital certificate is registered on the blockchain by indicating the location on the blockchain where his/her digital certificate is registered, together with his/her address and the verification key of the CA that issued the digital certificate.

In the present invention, functions are provided for registering and deleting the verification keys of the CA in the blockchain. For this purpose, the updates of the verification keys are recorded in a linked list that can be referenced backward from the new block to the past in sequence. Whenever a CA's verification key is added or revoked, the location information on the blockchain of the verification key to be added or revoked and the previous update information are recorded in the newly added block as update information. The location of the latest update is also recorded in a fixed position in each block. To verify that a key is valid at a certain point in time, the latest update information is referenced from the location of the update information recorded in the latest block, and the location of the previous update information in the block is traced back in order to confirm that the key has been registered and not deleted during the relevant period.

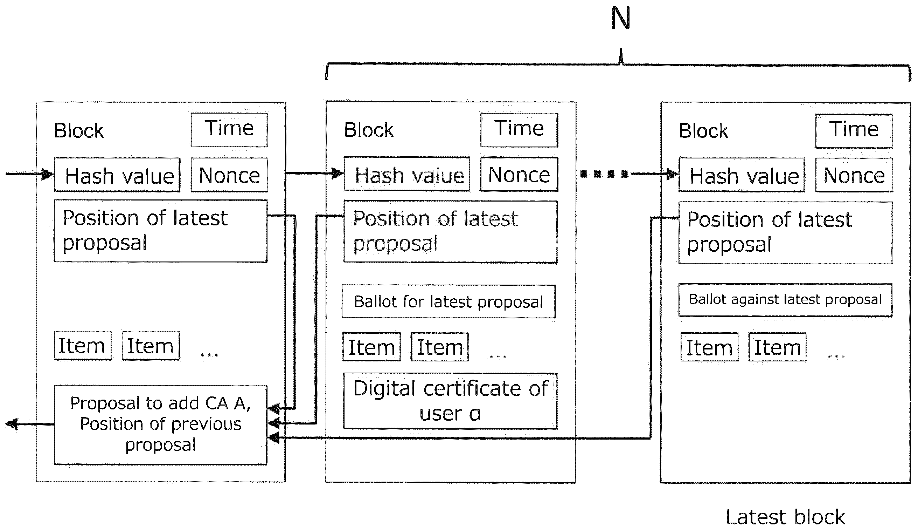

Fig. 1 shows an example of the data structure of a blockchain for the functionality of this system. In addition to data common to Bitcoin blocks, such as the time each block was added, hash value, nonce, etc., each block is appended with data indicating the position of the most recent proposal and whether the miner who added that block agrees or disagrees with each proposal. In addition, the user's digital certificate and the proposal for the addition or revocation of CAs can be added at any point in the block. Each proposal includes the position of the previous one. As shown in Examples 3 and 4, N blocks after each proposal is registered, it is decided that the proposal will be approved or rejected.

The blockchain system for the first invention is a blockchain system operated by nodes participating in a peer-to-peer network, and has means for registering the digital certificate of the verification key of each user account on the blockchain, and means for determining whether or not the digital certificate of the verification key of each user account is registered on the blockchain, and means for limiting the types of operations that the user can perform on the blockchain according to whether or not the digital certificate of the verification key of each user account is registered on the blockchain.

The second invention is a blockchain system according to the first invention. The blockchain system includes a means of registering and deleting the CA's verification key on the blockchain, and a means of verifying the authenticity of the digital certificate for each user account by using the verification key registered by this mechanism.

The third invention is a blockchain system according to the second invention. The blockchain system includes a means of deciding whether or not to register or delete the above-mentioned CA's verification key registered on the blockchain by a vote by the nodes participating in the system.

The fourth invention is a blockchain system according to the third invention. The blockchain system includes a means of identifying the information necessary to determine the amount of tax each user will be required to pay as a result of the forthcoming operations on the blockchain and a means for permitting the operation to be performed only when all the information has been entered into the system.

The fifth invention is a computer program for realizing a blockchain system according to any one of the first to fourth inventions.

### Effects of Invention

The blockchain system of the present application enables the following: 1) In a fully decentralized cryptocurrency, a portion of participants can register their identity information and the government authorities can view the registered identity information; 2) Each participant can choose whether or not to register his/her identity information; 3) Even if a participant registers his/her identity information to participate in the system and conducts transactions, not all of the registered participant's identity information will be disclosed to the public; only the information necessary to calculate the amount of tax due will be disclosed; 4) Basic operations such as mining and remittance can be performed by users who participate in the system without registering their personal information; 5) Illegal activities by users who do not register their personal information can be prevented; 6) Furthermore, the legality of transactions can be proven by requiring users who intend to conduct transactions to enter information that determines the amount of tax payments generated by transactions on this system. In addition, the computer program for the present invention realizes the blockchain system described above. As a result of these developments, the present invention limits transactions on the blockchain of cryptocurrencies to those that are legal, thereby expanding the use of the blockchain as a means of transactions, facilitating global distribution of cryptocurrencies and promoting economic growth around the world.

### BRIEF DESCRIPTION OF THE DRAWINGS

FIG 1 shows a conceptual diagram of the data structure of the blockchain for using the functions of this system.

### MODE FOR CARRYING OUT THE INVENTION

The following is a description of the embodiment of the invention. It goes without saying that various changes and modifications are possible within the scope that does not depart from the technical scope of the invention.

### EXAMPLE 1

This blockchain system is an example of the first invention and has algorithms 1-1, 1-2, 1-3, 1-4, 1-5, and 1-6 in addition to the fully decentralized blockchain system configuration using PoW.

The protocol of this invention is an enhancement of PoW, and thus, it uses common techniques with PoW. The PoW blockchain is structured as a peer-to-peer network. The entire network is loosely coupled without a fixed topology. In order for a node to join the network, it needs to know at least one node that has already joined. Each node is connected to several randomly selected nodes. Messages are broadcast by the gossip protocol. Each node holds a copy of all the information in the blockchain.

At each miner, two threads run in parallel, executing Algorithm 1-1 and Algorithm 1-2, respectively. The two threads running Algorithms 1-1 and 1-2 share list L of newly received items. To add an item to the blockchain, the item to be added is broadcast to the network. This item is received by Algorithm 1-1, which is run by each miner. Algorithm 1-3 can be used to register a digital certificate of a user account in the blockchain. Algorithm 1-4 can be used to check whether the digital certificate of the data on the blockchain is registered in the blockchain. If the operation of a given item in Algorithm 1-6 requires authentication, the algorithm verifies the digital certificate associated with the item and also verifies the item as an authenticated operation. For an item that requires authentication, both the verification of the digital certificate and the verification of the item as an authenticated operation must succeed for the item to be successfully verified. On the other hand, operations on the item that do not require authentication are verified as unauthenticated operations. By calling Algorithm 1-6 from Algorithm 1-5, which verifies the entire chain, the type of operations that can be performed is determined according to the availability of digital certificates.

```
Algorithm 1-1: Receive items and create blocks
 begin
  while true do
    while new block is not added do
       Receive item t.
       Add item t to list L of newly received items.
    end while
  end while
  end
```

Algorithm 1-1 adds the newly received item to the end of the item list.

```
Algorithm 1-2 : Mining
 begin
  Wait until a new block is added by other nodes.
  Hereafter, the chain with the new block will be processed.
  while true do
    Verify each element in list L of newly received items using Algorithm 1-6, and
    create block b from all successfully verified items.
  Empty L.
    repeat
      repeat
         Calculate the hash value of block b with a different nonce.
      until a new block is received or a nonce starting with a specified number of zero
      bits is found.
      if a nonce starting with a specified number of zero bits is found, broadcast the
      block containing that nonce to the network, and thereafter the chain with the broadcast
      block is processed.
      if a new block is received, call Algorithm 1-5 with that block as an argument to
      validate the chain.
      if the chain containing the new block is successfully verified and the
      corresponding chain is longer then
         Thereafter, the process is performed on the chain corresponding to that block.
         Move items not included in the chain to list L.
       end if
    until a new block is added.
  end while
  end
```

When Algorithm 1-2 begins, the miner first chooses a chain to work with. There can be multiple valid chains and they all start with the same block. A particular sequence of blocks, or chain, is identified by the trailing block. The miner begins to work on the chain corresponding to the first block received.

```
Algorithm 1-3: Register a digital certificate for the specified user accounts
 Input: Digital certificate of user account c
 begin
  Create an item containing the operation to simply add digital certificate c to the
  block, and send the item to the network.
  end
```

```
Algorithm 1-4: Check if the digital certificate of the user account is registered
 in the blockchain
 Input: The last block b in a chain, position p in the blockchain, user account u
 begin
  if the user account u is not registered in the chain ending with block b, return false.
  return true if the digital certificate registered at position p on the chain ending with
  block b can be verified with the public key of the default CA.
  return false.
  end
```

```
Algorithm 1-5: Validate the chain and return true only if the validation
 succeeds
 Input: Block b
 Output: Validate the chain ending with block b as the latest block and return true if and
 only if it is successful
 begin
  for all blocks k in the chain ending with block b as the latest block in chronological
  order do
    // Validate all items in block k and return false if it fails
    for all items t in block k do
       Verify item t using algorithm 1-6.
       if item t fails to validate then return false.
    end for
  end for
  return true.
  end
```

```
Algorithm 1-6 : Item Validation
 Input: Item t
 Output: A boolean value indicating whether verification succeeded
 begin
  if the operation of item t requires authentication then
    if the digital certificate associated with item t can be verified with the public key of
    the default CA then
      Verify item t as an authenticated operation and return false if it fails.
    else
      return false.
    endif
  else
    Validate item t as an unauthenticated operation and return false if it fails.
  endif
  return true.
  end
```

### EXAMPLE 2

This blockchain system is an example of the second invention and has algorithms 2-1, 2-2, 2-3, 2-4, 2-5, 2-6, 2-7, and 2-8 in addition to the fully decentralized blockchain system configuration using PoW.

As in Example 1, two threads run in parallel at each miner, executing Algorithm 2-1 and Algorithm 2-2, respectively. The two threads running Algorithms 2-1 and 2-2 share list L of newly received items. To add an item to the blockchain, the item to be added is broadcast to the network. This item is received by Algorithm 2-1, which is run by each miner. To register a digital certificate of a user account in the blockchain, Algorithm 2-3 is called. To check whether the digital certificate of the data on the blockchain is registered in the blockchain, Algorithm 2-4 is called.

In this example, to register or delete a verification key of a CA, Algorithm 2-7 is invoked. Algorithm 2-8 is used to obtain a list of verification keys of CAs that have been registered and not deleted at some time in the past or at the present time. Using the resulting public key, Algorithm 2-6, as in Example 1, verifies the digital certificate associated with the given item if the operation of the item requires authentication, and if the digital certificate is genuine, it continues to verify the item as an authenticated operation.

Algorithm 2-1 is the same as Algorithm 1-1.

```
Algorithm 2-2 : Mining.
 begin
  Wait until a new block is added by other nodes.
  Hereafter, the chain with the new block is processed.
  while true do
    Substitute empty block in block b.
    for each item e in list L do
       Call Algorithm 2-6 with (item e, current time) as its arguments.
      if verification by Algorithm 2-6 succeeds then
         Add item e to block b.
       end if
    end for
    Empty list L.
    repeat
      repeat
        Calculate the hash value of block b with a different nonce.
       until a new block is received or a nonce starting with a specified number of
       zero bits is found.
  if a nonce starting with a specified number of zero bits is found, broadcast the block
  containing that nonce to the network, and thereafter the chain with the broadcast block
  is processed.
  if a new block is received, call Algorithm 2-5 with that block as an argument to
  validate the chain.
  if the chain containing the new block is successfully verified and the corresponding
  chain is longer then
    Thereafter, the process is performed on the chain corresponding to that block.
    Move items not included in the chain to list L.
         end if
    until a new block is added.
  end while
  end
```

Algorithm 2-3 is the same as Algorithm 1-3.

```
Algorithm 2-4: Check if the digital certificate of the user account is registered
 in the blockchain.
 Input: Latest block b in a blockchain, position p in the blockchain, user account u
 begin
  if user account u is not registered in the chain ending with block b as the latest block,
  return false.
  Call Algorithm 2-8 with (block b, current time) as arguments to obtain a list of
  currently valid CA public keys. Substitute the result into list cs.
  return true if the digital certificate registered at position p on the chain ending with
  block b as the latest block can be verified with the public key of any CA in list cs.
  return false.
  end
```

```
Algorithm 2-5: Validate the chain and return true only if correct
 Input: Block b
 Output: Validate the chain ending with block b as the latest block and return true if and
 only if it is successful
 begin
  for all blocks k in the chain ending with block b as the latest block in chronological
  order do
    // Validate all items in block k and return false if it fails.
    for all items t in block k do
      Verify item t using Algorithm 2-6 with (item t, time of block k) as its arguments.
      if item t fails to validate then return false.
    end for
  end for
  return true.
  end
  
```

```
Algorithm 2-6 : Item validation
 Input: Item t, time m
 Output: A boolean value indicating whether verification succeeded or not
 begin
  Call Algorithm 2-8 with (the block currently being processed, time m) as arguments
  to obtain a list of public keys of the CAs valid at time m. Substitute the result into cs.
  if operation of item t requires authentication then
    if the digital certificate associated with item t can be verified with the public key of
    one of the CAs in list cs then
      Validate item t as an authenticated operation and return false if it fails.
    else
      return false.
    end if
  else
    Validate item t as an unauthenticated operation and return false if it fails.
  endif
  return true.
  end
```

```
Algorithm 2-7 : Register or delete a verification key for a CA
 Input: Operation o to register or delete a verification key for a CA
 begin
  Send operation o to the network as an item.
  end
```

```
Algorithm 2-8 : Obtain a list of verification keys of CAs registered in the
 blockchain at a given point in time.
 Input: The last block b in the blockchain, at time m
 Output : List of verification keys of CAs valid at time m in the chain ending with block
 b
 begin
  Empty list cs.
  for each operation o that adds or revokes a CA before time m in the blockchain,
  traced back from block b, in chronological order do
    if operation o is an addition of a CA then
       Add the CAs added by operation o to list cs.
    end if
    if operation o is a revocation of a CA then
       Remove the CAs revoked by operation o from list cs.
    end if
  end for
  return cs.
  end
```

### EXAMPLE 3

This blockchain system is an example of the third invention and has algorithms 3-1, 3-2, 3-3, 3-4, 3-5, 3-6, 3-7, and 3-8 in addition to the fully decentralized blockchain system configuration using PoW.

As in Example 2, two threads run in parallel at each miner, executing Algorithm 3-1 and Algorithm 3-2, respectively. The two threads running Algorithms 3-1 and 3-2 share list L of newly received items. To add an item to the blockchain, the item to be added is broadcast to the network. This item is received by Algorithm 3-1, which is run by each miner. To register a digital certificate of a user account in the blockchain, Algorithm 3-3 is called. To check whether the digital certificate of the data on the blockchain is registered in the blockchain, Algorithm 3-4 is called. To register a proposal to register or delete the verification key of a CA, Algorithm 3-7 is called.

In Example 3, a vote by the nodes participating in the system determines whether or not to register or revoke the verification key of the above-mentioned CA registered on the blockchain. To this end, a proposal to add or revoke the verification key of the CA is broadcast to the network, and the proposal is approved only if the node which adds the new block agrees to the proposal. The miner adds information indicating whether the miner agrees with the proposal to each newly added block (Algorithm 3-2). The information added to each block indicating whether or not the miner agrees with each proposal can be regarded as a random sampling per CPU power. A p-value is calculated from the number of approvals in several consecutive blocks, and the proposal is approved if the likelihood that more than a certain percentage of nodes are in favor of the proposal is greater than a pre-determined value. In this example, for each proposal to register or delete the verification key of a CA, ballots by miners are accepted for N block times. Algorithm 3-8 then checks among the blocks added within the N blocks, whether the number of blocks including data indicating support for the proposal is larger than the certain number calculated in advance from the p-value and N. In this way, it is checked whether each proposal was approved during the subsequent N block time.

Algorithm 3-1 is the same as Algorithm 1-1.

```
Algorithm 3-2 : Mining
 begin
 Wait until a new block is added by other nodes.
  Hereafter, the chain with the new block is processed.
  while true do
    Empty block b.
    for each item e in list L do
       Call Algorithm 3-6 with (item e, current time) as its arguments to verify item e.
       if item e is successfully verified then
         Add item e to block b.
       end if
    end for
    Add to block b the approval or disapproval information for the proposal to register
    or delete the public key of the CA that has been registered in the blockchain within the
    last N block times.
    Empty list L.
    repeat
       repeat
       Calculate the hash value of block b with a different nonce.
       until a new block is received or a nonce starting with a specified number of zero
       bits is found.
       if a nonce starting with a specified number of zero bits is found, broadcast the
       block containing that nonce to the network, and thereafter the chain with the broadcast
       block is processed.
       if a new block is received, call Algorithm 3-5 with that block as an argument to
       validate the chain.
       if the chain containing the new block is successfully verified and the
       corresponding chain is longer then
         Thereafter, the process is performed on the chain corresponding to that block.
         Move items not included in the chain to list L.
       end if
    until a new block is added.
  end while
  end
```

Algorithm 3-3 is the same as Algorithm 1-3

```
Algorithm 3-4: Check if the digital certificate of the user account is registered
 in the blockchain
 Input: Latest block b in a blockchain, position p in the blockchain, user account u
 begin
  If the user account u is not registered in the chain ending with block b as the latest
  block, return false.
  Call Algorithm 3-8 with (block b, current time) as arguments to obtain a list of
  currently valid CA public keys. Substitute the result into list cs.
  Return true if the digital certificate registered at position p on the chain ending with
  block b can be verified with the public key of any CA in list cs.
  return false.
  end
```

```
Algorithm 3-5: Validate the chain and return true only if correct
 Input: Block b
 Output: Validate the chain ending with block b as the latest block and return true if and
 only if it is successful
 begin
  for all blocks k in the chain ending with block b as the latest block in chronological
  order do
    // Validate all items in block k and return false if it fails
    for all items t in block k do
      Verify item t using Algorithm 3-6 with (item t, time of block k) as arguments.
      if item t fails to validate then return false.
    end for
  end for
  return true.
  end
```

```
Algorithm 3-6 : Item validation
 Input: Item t, time m
 Output: A boolean value indicating whether verification succeeded or not
 begin
  Call Algorithm 3-8 with (latest block of the chain currently being processed, time m)
  as arguments to obtain a list of public keys of CAs valid at time m of the chain currently
  being processed. Substitute the result into list cs.
  if operation of item t requires authentication then
    if the digital certificate associated with item t can be verified with the public key of
    one of the CAs in list cs then
      Validate item t as an authenticated operation and return false if it fails.
    else
      return false.
    endif
  else
    Validate item t as an unauthenticated operation and return false if it fails.
  endif
  return true
  end
```

```
Algorithm 3-7 : Register a proposal to register or delete the verification key of
 a CA
 Input: Operation o of registering a proposal to register or delete the verification key of a
 CA
 begin
  Send operation o to the network as an item.
  end
  
```

```
Algorithm 3-8 : Obtain a list of verification keys of CAs registered in the
 blockchain at a given point in time
 Input : Last block b in the blockchain, time m
 Output : List of verification keys of the CAs
 begin
  Empty list cs
  for each proposal o of addition or revoke of CAs registered in the blockchain before
  time m, traced back from block b, in time order do
     if o is a proposal to add CA c, and proposal o is approved within N block times
     then
        Add the CAs added by proposal o to list cs.
    end if
    if o is a proposal to revoke CA c, and proposal o is approved within N block times then
      Remove the CAs to be revoked by proposal o from list cs.
    end if
  end for
  return list cs.
  end
```

### EXAMPLE 4

This blockchain system is an example of the fourth invention and has algorithms 4-1, 4-2, 4-3, 4-4, 4-5, 4-6, 4-7, and 4-8 in addition to the fully decentralized blockchain system configuration using PoW.

As in Example 3, two threads run in parallel at each miner, executing Algorithm 4-1 and Algorithm 4-2, respectively. The two threads running Algorithms 4-1 and 4-2 share list L of newly received items. To add an item to the blockchain, the item to be added is broadcast to the network. This item is received by Algorithm 4-1, which is run by each miner. To register a digital certificate of a user account in the blockchain, Algorithm 4-3 is called. To check whether the digital certificate of the data on the blockchain is registered in the blockchain, Algorithm 4-4 is called. To register a proposal to register or delete a verification key for CA, Algorithm 4-7 is called. In this example, for each proposal to register or delete the verification key of a CA, ballots by miners are accepted for N block times. In Algorithm 4-8, each proposal is then checked to see if it was approved during the subsequent N block times. To do this, for example, it checks whether a defined number or more of the blocks that are added within these N blocks have data indicating that they are in favor of the proposal.

In Example 4, Algorithm 4-6 identifies the information necessary to determine the amount of tax each user has to pay when performing the operation of each item, checks whether this information is available, and determines the verification result of the execution of each item accordingly, thereby allowing or prohibiting the execution of the operation. For example, if the exact time information at which each operation was performed is needed to determine the amount of tax due in Country A, and the price in legal tender of the cryptocurrency paid is needed in addition in Country B, then depending on whether each user's nationality is Country A or Country B, these pieces of information are identified as necessary to determine the amount of tax due. Next, the system checks whether each operation includes these pieces of information and makes their inclusion a necessary condition for successful verification, thereby prohibiting operations that do not include all of this information.

Algorithm 4-1 is the same as Algorithm 1-1.

```
Algorithm 4-2 : Mining
 begin
 Wait until a new block is added by other nodes.
  After that, the chain with the new block is processed.
  while true do
    Empty block b.
    for each item e in list L do
      Call Algorithm 4-6 with (item e, current time) as an argument to verify item e
       if item e is successfully verified then
        Add item e to block b.
       end if
    end for
    Add to block b the approval or disapproval information for the proposal to register
    or delete the public key of the CA that has been registered in the blockchain within the
    past N block times.
    Empty list L
    repeat
       repeat
  Calculate the hash value of block b with a different nonce.
       until a new block is received or a nonce starting with a specified number of zero
       bits is found.
       if a nonce starting with a specified number of zero bits is found, broadcast the
       block containing that nonce to the network, and thereafter the chain with the broadcast
       block is processed.
      if a new block is received, call Algorithm 4-5 with that block as an argument to
      validate the chain.
       if the chain containing the new block is successfully verified and the
       corresponding chain is longer then
         Thereafter, the process is performed on the chain corresponding to that block.
         Move items not included in the chain to list L.
       end if
    until a new block is added.
  end while
  end
```

Algorithm 4-3 is the same as Algorithm 1-3.

Algorithm 4-4 is the same as Algorithm 3-4.

```
Algorithm 4-5: Validate the chain and return true only if correct
 Input: Block b
 Output: Validate the chain ending with block b as the latest block and return true if and
 only if it is correct
 begin
  for all blocks k in the chain ending with block b as the latest block in chronological
  order do
    // Validate all items in block k and return false if it fails.
    for all items t in k do
       Verify item t using algorithm 4-6 with (item t, time of block k) as argument.
       if item t fails to validate then return false.
    end for
  end for
  return true.
  end
```

```
Algorithm 4-6 : Item validation
 Input: Item t, time m
 Output: A boolean value indicating whether verification was successful or not
 begin
  Call Algorithm 4-8 with (the last block of the chain currently processed, time m) as
  arguments to obtain a list of public keys of the CAs valid at time m in the chain
  currently processed. Substitute the result to the list cs.
  Identify the information needed to determine the amount of tax each user must pay
  when performing the operation on item t, and check whether this information is
  complete
  if all the information is not available then
    return false
  end if
  if the operation of item t requires authentication then
    if the digital certificate associated with item t can be verified with the public key of
    one of the CAs in list cs then
      Validate item t as an authenticated operation and return false if it fails.
    else
      return false
    endif
  else
    Validate item t as an unauthenticated operation and return false if it fails.
  endif
  return true.
  end
```

Algorithm 4-7 is the same as Algorithm 3-7.

Algorithm 4-8 is the same as Algorithm 3-8.

### INDUSTRIAL APPLICABILITY.

The blockchain system of the present application is also applicable to existing blockchain systems for trading various cryptocurrencies, and allows limiting transactions of cryptocurrencies to legal ones.

## Claims

1. A blockchain system for implementing a blockchain and operated by nodes participating in a peer-to-peer network, comprising means for registering for each user account a digital certificate of a verification key of the user account on the blockchain, and means for determining for each user account whether or not said digital certificate of said verification key of said user account is registered on the blockchain; and a means for limiting types of operations that can be performed by a user on the blockchain according to whether or not said digital certificate of said verification key of the user account of the user is registered on the blockchain.

2. The blockchain system of claim 1, comprising means for registering and deleting verification keys of CAs on the blockchain, and means for verifying authenticity of said digital certificates for each user account using said registered verification keys.

3. The blockchain system of claim 2, comprising means for determining whether or not to register or delete the verification key of one of said CAs registered on the blockchain by voting by the nodes participating in the blockchain system.

4. The blockchain system of claim 3, comprising means to identify information necessary to determine an amount of tax the user is required to pay that will be generated by an operation the user is about to perform on the blockchain, and means to permit the user to perform said operation only if all the information has been entered into the system.

5. A computer program comprising instructions which, when executed on a computer system, cause the computer system to implement the blockchain system according to any one of claims 1 to 4.

## Patentansprüche

1. Blockchain-System zur Implementierung einer Blockchain, welches durch Knoten betrieben wird, die an einem Peer-to-Peer-Netzwerk teilnehmen, welches Mittel zum Registrieren eines digitalen Zertifikats eines Verifizierungsschlüssels eines Benutzerkontos auf der Blockchain für jedes Benutzerkonto sowie, für jedes Benutzerkonto, Mittel zum Bestimmen aufweist, ob das digitale Zertifikat des Verifizierungsschlüssels des Benutzerkontos auf der Blockchain registriert ist oder nicht;
und Mittel zum Beschränken von Arten von Operationen aufweist, die durch einen Benutzer auf der Blockchain durchgeführt werden können, je nachdem, ob das digitale Zertifikat des Verifizierungsschlüssels des Benutzerkontos des Benutzers auf der Blockchain registriert ist oder nicht.

2. Blockchain-System nach Anspruch 1, welches Mittel zum Registrieren und Löschen von Verifizierungsschlüsseln von Zertifizierungsinstanzen auf der Blockchain und Mittel zum Verifizieren der Authentizität der digitalen Zertifikate für jedes Benutzerkonto unter Verwendung der registrierten Verifizierungsschlüssel aufweist.

3. Blockchain-System nach Anspruch 2, welches Mittel zum Bestimmen, ob der Verifizierungsschlüssel von einer der auf der Blockchain registrierten Zertifizierungsinstanzen durch Abstimmung durch die am Blockchain-System teilnehmenden Knoten registriert oder gelöscht werden soll.

4. Blockchain-System nach Anspruch 3, welches Mittel zum Identifizieren von Informationen, die erforderlich sind zum Bestimmen eines Gebührenbetrags, den der Benutzer zu zahlen hat und der durch eine Operation generiert wird, die der Benutzer im Begriff ist, auf der Blockchain durchzuführen, und Mittel aufweist, um dem Benutzer die Durchführung der Operation nur dann zu gestatten, wenn alle Informationen in das System eingegeben worden sind.

5. Computerprogramm, welches Anweisungen aufweist, die, wenn sie auf einem Computersystem ausgeführt werden, bewirken, dass das Computersystem das Blockchain-System nach einem der Ansprüche 1 bis 4 implementiert.

## Revendications

1. Un système de chaîne de blocs destiné à mettre en œuvre une chaîne de blocs et exploité par des nœuds participant à un réseau peer-to-peer, comprenant des moyens pour enregistrer pour chaque compte utilisateur un certificat numérique d'une clé de vérification du compte utilisateur sur la chaîne de blocs, et des moyens pour déterminer pour chaque compte utilisateur si ledit certificat numérique de ladite clé de vérification dudit compte utilisateur est enregistré ou non sur la chaîne de blocs ; et un moyen pour limiter les types d'opérations pouvant être effectuées par un utilisateur sur la chaîne de blocs selon que ledit certificat numérique de ladite clé de vérification du compte utilisateur de l'utilisateur est enregistré ou non sur la chaîne de blocs.

2. Le système de chaîne de blocs selon la revendication 1, comprenant des moyens pour enregistrer et supprimer des clés de vérification des CA sur la chaîne de blocs, et des moyens pour vérifier l'authenticité desdits certificats numériques pour chaque compte utilisateur à l'aide desdites clés de vérification enregistrées.

3. Le système de chaîne de blocs selon la revendication 2, comprenant des moyens pour déterminer s'il convient ou non d'enregistrer ou de supprimer la clé de vérification de l'une desdites CA enregistrées sur la chaîne de blocs par un vote des nœuds participant au système de chaîne de blocs.

4. Le système de chaîne de blocs selon la revendication 3, comprenant des moyens pour identifier les informations nécessaires afin de déterminer le montant de la taxe que l'utilisateur est tenu de payer, qui sera généré par une opération que l'utilisateur s'apprête à effectuer sur la chaîne de blocs, et des moyens pour permettre à l'utilisateur d'effectuer ladite opération uniquement si toutes les informations ont été saisies dans le système.

5. Un programme informatique comprenant des instructions qui, lorsqu'elles sont exécutées sur un système informatique, amènent le système informatique à mettre en œuvre le système de chaîne de blocs selon l'une des revendications 1 à 4.
